# EUROPEAN PATENT APPLICATION

(11) **EP 2 485 377 A1**
(43) Date of publication of application: **08.08.2012**
(21) Application number: 10820443.9
(22) Date of filing: 24.09.2010
(51) Int. Cl.: H02M 3/155, H02J 1/12, H02J 7/35

(54) **DC POWER SUPPLY FEEDING SYSTEM**

(30) Priority: 30.09.2009 JP 2009227476; 21.04.2010 JP 2010098028
(71) Applicant: Toshiba Lighting&Technology Corporation, Yokosuka-shi, Kanagawa 237-8510 (JP)
(72) Inventor: KITAMURA, Noriyuki, (JP); NAGASAKI, Fumihiko, (JP); TAKAHASHI, Toshiaki, (JP); MIGITA, Koji, (JP); SASAI, Toshihiko, (JP); KATANO, Chikako, (JP)
(74) Representative: Sander Jakobsson, Sofia Ellinor
(86) International application number: PCT/JP2010/066530
(87) International publication number: WO 2011/040325

(57) **Abstract**

A DC power supply feeding system 1 according to one embodiment, includes a DC voltage power supply 2 that outputs a specified voltage by using a commercial AC power supply, a varying voltage power supply 3,4 that generates power by using natural energy and outputs a varying voltage, and a reverse flow preventing elements 5a, 5b that connects the DC voltage power supply and the varying voltage power supply in parallel while output sides are made to have same polarity, and supplies powers obtained from the DC voltage power supply and the varying voltage power supply to a load 6. When an amount of power generation of the varying voltage power supply 3,4 is small and the output voltage is lower than the specified voltage outputted from the DC voltage power supply 2, the power is intermittently supplied to the load.

## Description

### Technical Field

Embodiments described herein relate generally to a DC power supply feeding system using an AC power supply and a power generating unit to generate DC power from natural energy.

### Background Art

For example, in a photovoltaic power generation system, since the output of a solar cell is significantly influenced by weather, and power generation is not performed at night, the solar cell is combined with a commercial AC power supply, the instability is compensated by the commercial AC power supply, and stable power is supplied to an electric equipment. For example, when the sunshine is sufficient, power is supplied from the solar cell, and when the sunshine is insufficient and the output voltage of the solar cell is reduced, power is supplied from the commercial AC power supply.

Besides, commercial AC voltage is adjusted to a voltage almost equal to a voltage at the maximum power point of the solar cell, and when the sunshine is sufficient, power is supplied from the solar cell. When the sunshine is insufficient and the output of the solar cell is reduced, maximum power is supplied from the solar cell, and insufficient power is compensated by the commercial power supply.

### Citation List

### Patent Literature

Patent document 1: JP-A-5-199676
Patent document 2: JP-A-5-108176

### Summary of Invention

### Technical Problem

In a power supply of a combination of a solar cell and a commercial AC power supply, when the output voltage of the solar cell is reduced due to insufficient sunshine, the power is supplied from only the commercial AC power supply to a load, and the power generated by the solar cell is not used.

An exemplary embodiment described herein provides, in a system for supplying DC power supply by using both a commercial AC power supply and natural energy, an inexpensive DC power supply feeding system which can efficiently use the natural energy even when the amount of power generation is small.

### Solution to Problem

In general, according to one embodiment, a DC power supply feeding system includes a DC voltage power supply that outputs a specified voltage by using a commercial AC power supply, a varying voltage power supply that generates power by using natural energy and outputs a varying voltage, and a reverse flow preventing element that connects the DC voltage power supply and the varying voltage power supply in parallel while output sides are made to have same polarity, and supplies powers obtained from the DC voltage power supply and the varying voltage power supply to a load. When an amount of power generation of the varying voltage power supply is small and the output voltage is lower than the specified voltage outputted from the DC voltage power supply, the power is intermittently supplied to the load.

### Advantageous Effects of Invention

In the system for supplying the DC power supply by using both the commercial AC power supply and the natural energy, the inexpensive DC power supply feeding system can be provided which can efficiently use the natural energy even when the amount of power generation is small.

### Brief Description of Drawings

[FIG. 1] A schematic circuit view showing a DC power supply feeding system of a first embodiment.
[FIG. 2] (a) is a waveform view of a full-wave rectified voltage V1 outputted from a full-wave rectifying device, (b) is a waveform view of a constant DC voltage outputted from a DC-DC conversion circuit, (c) is a waveform view of a DC voltage outputted from the DC-DC conversion circuit, and (d) is a waveform view of a DC voltage outputted between common output terminals.
[FIG. 3] A correlation view showing the change of the output voltage of the DC-DC conversion circuit with respect to the input voltage thereof.
[FIG. 4] (a) is a voltage waveform view of a set value, (b) is a waveform view of a DC voltage V4 outputted between the common output terminals.
[FIG. 5] A schematic circuit view showing a power supply device of a luminaire.
[FIG. 6] An another correlation view showing the change of the output voltage of the DC-DC conversion circuit with respect to the input voltage thereof.
[FIG. 7] A schematic circuit view showing a DC power supply feeding system of a second embodiment.
[FIG. 8] A view showing a current (left vertical axis) - voltage (horizontal axis) characteristic and an output (right vertical axis) - voltage (horizontal axis) characteristic of a solar cell.

### Mode for Carrying Out the Invention

In general, according to one embodiment, a DC power supply feeding system includes a DC voltage power supply that outputs a specified voltage by using a commercial AC power supply, a varying voltage power supply that generates power by using natural energy and outputs a varying voltage, and a reverse flow preventing element that connects the DC voltage power supply and the varying voltage power supply in parallel while output sides are made to have same polarity, and supplies powers obtained from the DC voltage power supply and the varying voltage power supply to a load. When an amount of power generation of the varying voltage power supply is small and the output voltage is lower than the specified voltage outputted from the DC voltage power supply, the power is intermittently supplied to the load.

In the system for supplying the DC power supply by using both the commercial AC power supply and the natural energy, the inexpensive DC power supply feeding system can be provided which can efficiently use the natural energy even when the amount of power generation is small.

Hereinafter, embodiments will be described in detail with reference to the drawings.

In the embodiments, a power generating unit generates DC power from natural energy, and a DC-DC conversion circuit raises or reduces the DC voltage outputted from the power generating unit. In a period in which the DC voltage from the DC-DC conversion circuit is equal to or higher than a full-wave rectified voltage V1 outputted from a full-wave rectifying device, the DC power outputted from the power generating unit is supplied to a load. Here, the DC power generated by the power generating unit is supplied to the load side irrespective of the amount of power generation.

### Embodiment 1

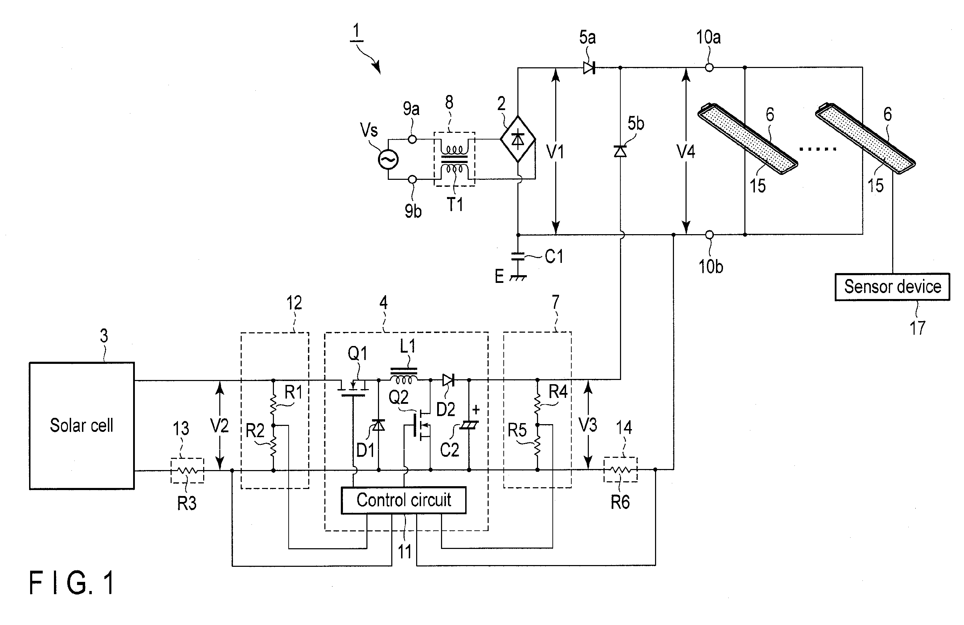

FIG. 1 to FIG. 6 show a first embodiment and are views for explaining a DC power supply feeding system.

In FIG. 1, a DC power supply feeding system 1 includes a full-wave rectifying device 2, a solar cell 3 as a power generating unit, a DC-DC conversion circuit 4, reverse flow preventing elements 5a and 5b, plural luminaires 6 as a load, and an output voltage detection circuit 7 as a voltage detection unit. The DC power supply feeding system is configured by combining the full-wave rectifying device 2 and the solar cell 3.

The full-wave rectifying device 2 includes a full-wave rectifier, and an input terminal thereof is connected to input terminals 9a and 9b through a noise filter circuit 8. The input terminals 9a and 9b are connected to a commercial AC power supply Vs. The noise filter circuit 8 includes a common mode choke coil T1. A negative output terminal of the full-wave rectifying device 2 is connected to the earth E through a capacitor C1.

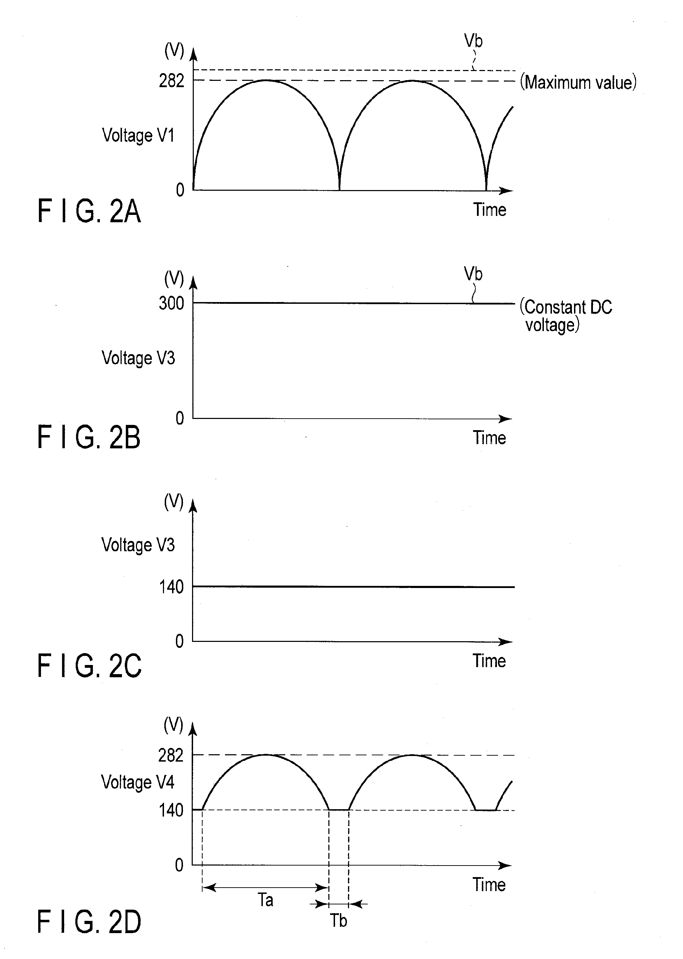

The full-wave rectifying device 2 performs full-wave rectification of an AC voltage, for example, AC 200V (rated voltage) supplied from the commercial AC power supply Vs through the noise filter circuit 8. As shown in FIG. 2A, the maximum value of this full-wave rectified voltage V1 is 282V.

In FIG. 1, in the solar cell 3, plural not-shown solar cells are connected in series or in series-parallel to each other, generate power from sunlight as natural energy, and output the generated DC power. The output side of the solar cell 3 is connected to the DC-DC conversion circuit 4.

The input side of the DC-DC conversion circuit 4 is connected to the output side of the solar cell 3, and the DC power outputted from the solar cell 3 is inputted. Besides, the output side of the DC-DC conversion circuit 4 is connected in parallel to the output side of the full-wave rectifying device 2 while the output sides have the same polarity. That is, the positive output terminal of the DC-DC conversion circuit 4 is connected to the positive output side of the full-wave rectifying device 2 and an output terminal 10a through the diode 5b, and the negative output terminal is connected to the negative output side of the full-wave rectifying device 2 and an output terminal 10b through a resistor R6. The positive output terminal of the full-wave rectifying device 2 is connected to the output terminal 10a through the diode 5a, and the negative output terminal is connected to the output terminal 10b. The output terminals 10a and 10b are common output terminals of the full-wave rectifying device 2 and the DC-DC conversion circuit 4.

The DC-DC conversion circuit 4 is, for example, a well-known step-up (voltage raising or boost) and step-down (voltage reducing) chopper circuit, and chops the output voltage of the solar cell 3 by on and off operations of field effect transistors Q1 and Q2 to output a DC voltage. That is, the DC-DC conversion circuit 4 includes a series circuit of the field effect transistor Q1 and a current regeneration diode D1 connected between the outputs of the solar cell 3, a series circuit of an inductor L1 and the field effect transistor Q2 connected between both ends of the diode D1, and a series circuit of a backflow preventing diode D2 and a smoothing capacitor C2 connected between the drain and source of the field effect transistor Q2. The respective gates of the field effect transistors Q1 and Q2 are connected to a control circuit 11.

When the field effect transistor Q2 is on-off controlled by the control circuit 11 in a state where the field effect transistor Q1 is on, the DC-DC conversion circuit 4 performs a step-up (boost) chopper operation. When the field effect transistor Q1 is on-off controlled in a state where the field effect transistor Q2 is off, the DC-DC conversion circuit performs a step-down chopper operation. By this operation, the output DC voltage of the DC-DC conversion circuit 4 is generated between both ends of the smoothing capacitor C2.

An input voltage detection circuit 12 and an input current detection circuit 13 are connected to the input side of the DC-DC conversion circuit 4. The input voltage detection circuit 12 includes a series circuit of a resistor R1 and a resistor R2, and detects the DC voltage (input voltage of the DC-DC conversion circuit 4) outputted from the solar cell 3. The input current detection circuit 13 includes a resistor R3, and detects the DC current (input current of the DC-DC conversion circuit 4) outputted from the solar cell 3 based on the voltage at both ends of the resistor R3. The detected input voltage and the input current of the DC-DC conversion circuit 4 are inputted to the control circuit 11.

Besides, the output voltage detection circuit 7 as a voltage detection unit and an output current detection circuit 14 are connected to the output side of the DC-DC conversion circuit 4. The output voltage detection circuit 7 includes a series circuit of a resistor R4 and a resistor R5, and detects the DC voltage (output voltage) outputted from the DC-DC conversion circuit 4. The output current detection circuit 14 includes the resistor R6, and detects the DC current (output current) outputted from the DC-DC conversion circuit 4 based on the voltage at both ends of the resistor R6. The output voltage value and the output current value of the DC-DC conversion circuit 4 are inputted to the control circuit 11.

The control circuit 11 calculates input power based on the input voltage and the input current of the DC-DC conversion circuit 4, and calculates output power based on the output voltage and the output current of the DC-DC conversion circuit 4. Besides, the control circuit 11 on-off controls the field effect transistors Q1 and Q2 so that the calculated output power becomes lower than the calculated input power. This is because if the output power becomes larger than the input power, the output voltage of the solar cell 3 is reduced, and the conversion efficiency is lowered.

Besides, when the DC voltage V2 (input voltage of the DC-DC conversion circuit 4) outputted from the solar cell 3 is equal to or higher than a previously set specified value, the control circuit 11 on-off controls the field effect transistors Q1 and Q2 so that a constant DC voltage is generated between both ends of the smoothing capacitor C2. At this time, the control circuit 11 turns off the transistor Q2, and controls the output voltage of the DC-DC conversion circuit 4 to the constant DC voltage by adjusting the duty ratio of on-off signals to the transistor Q1. The constant DC voltage is set to be equal to or higher than the maximum value (282V) of the full-wave rectified voltage V1 (AC 200V) outputted from the full-wave rectifying device 2. Here, as shown in FIG. 2A, the constant DC voltage Vb is set to be 300V slightly higher than the maximum value (282V). Besides, the specified value is set to, for example, a lower limit value within a DC voltage (output voltage) range in which the luminaire 6 as the load can operate by the generated power when the solar cell 3 sufficiently generates power by sufficient sunshine.

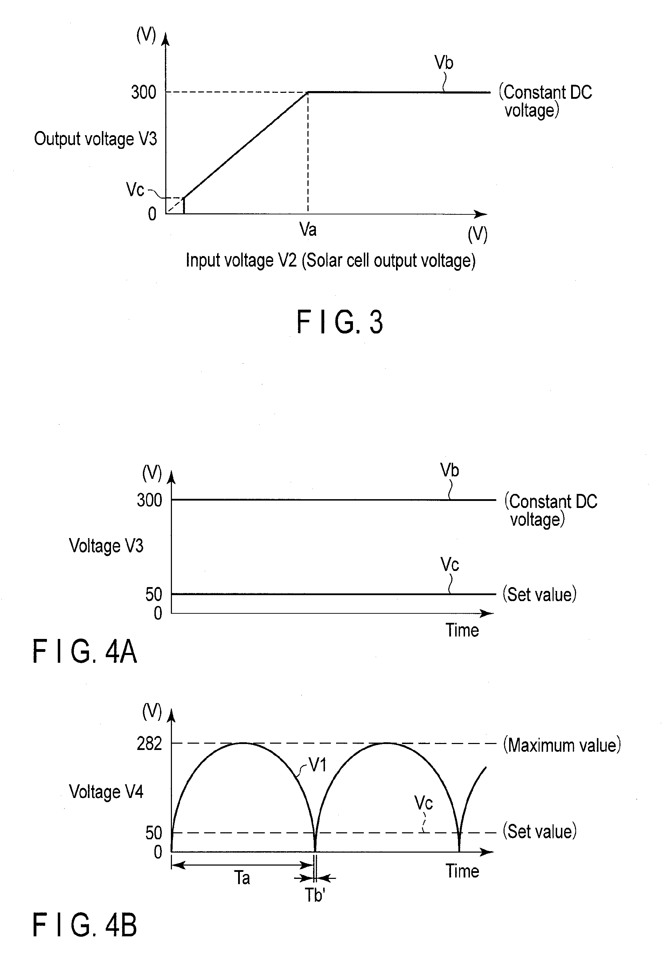

As shown in FIG. 3, when the DC voltage V2 outputted from the solar cell 3 is lower than a previously set specified value Va, the control circuit 11 on-off controls the field effect transistors Q1 and Q2 so that the DC voltage corresponding to the DC voltage V2 outputted from the solar cell 3 is generated between both the ends of the smoothing capacitor C2. For example, as the DC voltage V2 outputted from the solar cell 3 gradually decreases from the specified value Va by the reduction in sunshine, the DC voltage decreasing in proportion to the input voltage V2 (solar cell output voltage) from the constant DC voltage (300V) is generated between both the ends of the smoothing capacitor C2. On the other hand, when the sunshine increases, as the DC voltage V2 outputted from the solar cell 3 gradually increases, the DC voltage V3 increasing in proportion to the input voltage (solar cell output voltage) is generated between both the ends of the smoothing capacitor C2. That is, when the sunshine is insufficient and the amount of power generation is small, the DC-DC conversion circuit 4 outputs the DC voltage increasing or decreasing in proportion to the DC voltage V2 outputted from the solar cell 3. When the sunshine is sufficient and the DC voltage V2 outputted from the solar cell 3 is equal to or higher than the specified value Va, the DC-DC conversion circuit operates to output the constant DC voltage (300V).

Besides, when the output voltage V3 detected by the output voltage detection circuit 7 is equal to or lower than a previously set value Vc, the control circuit 11 stops the on and off operations of the field effect transistors Q1 and Q2, and stops the output of the output voltage (DC voltage) V3 from the DC-DC conversion circuit 4. The set value Vc is set to a voltage value significantly lower than the constant DC voltage Vb (300V). As shown in FIG. 4A, the set value Vc is set to, for example, DC 50V close to 0V. Thus, the DC-DC conversion circuit 4 outputs the voltage of from the set value (50V) to the constant DC voltage (300V) with respect to the DC voltage V2 outputted from the solar cell 3.

The reverse flow preventing elements 5a and 5b are diodes, and the respective cathodes are connected in common. The reverse flow preventing elements are respectively connected to the positive output terminal of the full-wave rectifying device 2 and the positive output terminal of the DC-DC conversion circuit 4 at the full-wave rectifying device 2 side and the DC-DC conversion circuit 4 side with respect to the output terminals 10a and 10b. The reverse flow preventing elements 5a and 5b prevent the output current from reversely flowing.

In this way, the reverse flow preventing elements 5a and 5b combine the full-wave rectifying device 2 and the DC-DC conversion circuit 4 (solar cell 3). The output terminals 10a and 10b are common output ends of the full-wave rectifying device 2 and the DC-DC conversion circuit 4. The cathode of the reverse flow preventing elements 5a and 5b are connected to the output terminal 10a, and the output terminal 10b is connected to the negative output terminals of the full-wave rectifying device 2 and the DC-DC conversion circuit 4.

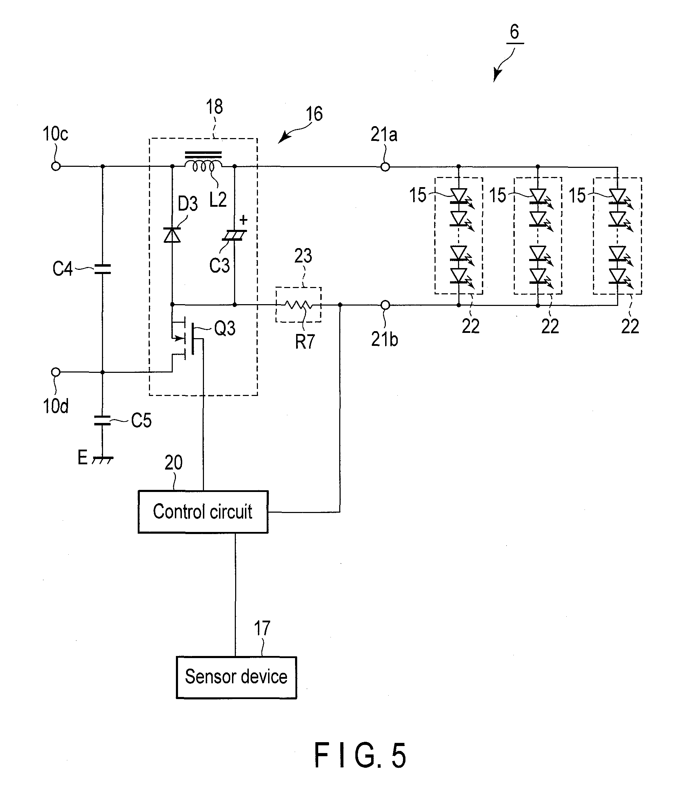

In the luminaire 6 as the load, light-emitting diodes 15 are arranged in plane. The plural luminaires 6 are connected between the output terminals 10a and 10b. A power supply device 16 shown in FIG. 5 is disposed in the luminaire 6. The power supply device 16 receives a voltage within a specified range, for example, 250V to 330V, and supplies a specified current to the light-emitting diode 15 to turn on the light-emitting diode 15. The light-emitting diode 15 is turned on and emits visible light, for example, white light.

A sensor device 17 is connected to at least one of the luminaires 6. The sensor device 17 is, for example, a human sensitive sensor or an illumination sensor. The power supply device 16 turns on and off or dims the light-emitting diode 15 according to the operation of the sensor device 17.

As shown in FIG. 5, the power supply device 16 includes a step-down chopper circuit 18 to which a DC voltage is inputted and which can respond to variation of the voltage. The step-down chopper circuit 18 includes a series circuit of a diode D3 and a field effect transistor Q3 connected to input terminals 10c and 10d of the power supply device 16, and a series circuit of an inductor L2 and a smoothing capacitor C3 connected to the diode D3. The field effect transistor Q3 is on-off controlled by a control circuit 20. Both ends of the smoothing capacitor C3 are connected to output terminals 21a and 21b of the power supply device 16. Plural LED circuits 22 are connected in parallel to the output terminals 21a and 21b. The LED circuit 22 is formed by connecting the plural light-emitting diodes 15 in series.

A capacitor C4 is connected between the input terminals 10c and 10d. The negative side of the capacitor C4 is connected to the earth E through a capacitor C5. An output current detection circuit 23 of the power supply device 16 is connected between the negative side of the smoothing capacitor C3 of the step-down chopper circuit 18 and the output terminal 21b. The output current detection circuit 23 includes a resistor R7, detects a current flowing through the light-emitting diode 15 based on a voltage generated between both ends of the resistor R7, and outputs the detected current to the control circuit 20. The sensor device 17 is connected to the control circuit 20.

The input terminals 10c and 10d are connected to the common output terminals 10a and 10b of the full-wave rectifying device 2 and the DC-DC conversion circuit 4. The diode-OR output voltage of the full-wave rectified voltage V1 (maximum value 282V) outputted from the full-wave rectifying device 2 and the DC voltage V3 outputted from the DC-DC conversion circuit 4 is inputted between the input terminals 10c and 10d. That is, a higher voltage of the full-wave rectified voltage V1 and the output DC voltage V3 of the conversion circuit 4 is supplied between the input terminals 10c and 10d. The diode-OR output voltage is converted to a voltage suitable for the LED circuit 22 by the step-down chopper circuit 18. That is, the control circuit 20 on-off controls the field effect transistor Q3 of the step-down chopper circuit 18 so that a constant current flows through the light-emitting diode 15, and causes a constant voltage, for example, DC 90V to be generated between both the ends of the smoothing capacitor C3. Besides, the control circuit 20 turns on and off or dims the light-emitting diode 15 according to the operation of the sensor device 17.

Next, the operation of the first embodiment will be described.

In FIG. 1, when the commercial AC power supply Vs (AC 200V) is turned on, the full-wave rectified voltage V1 shown in FIG. 2A is outputted between the output terminals 10a and 10b from the full-wave rectifying device 2. Besides, when the solar cell 3 generates power by the sunshine of the sunlight, the DC voltage V3 outputted from the DC-DC conversion circuit 4 is outputted between the output terminals 10a and 10b. In a period in which the DC voltage V3 outputted from the DC-DC conversion circuit 4 is equal to or higher than the full-wave rectified voltage V1 outputted from the full-wave rectifying device 2, the DC voltage V3 outputted from the DC-DC conversion circuit 4 is inputted to the luminaire 6 as the load. In a period in which the DC voltage V3 outputted from the DC-DC conversion circuit 4 is lower than the full-wave rectified voltage V1 outputted from the full-wave rectifying device 2, the full-wave rectified voltage V1 outputted from the full-wave rectifying device 2 is inputted to the luminaire 6. The power supply device 16 of the luminaire 6 supplies the constant current to the light-emitting diode 15. By this, the light-emitting diode 15 is turned on, and the luminaire 6 emits visible light, for example, while light.

When the sunshine of the sunlight is sufficient, and the output voltage V2 of the solar cell 3 becomes a voltage equal to or higher than the specified value Va, as shown in FIG. 2B, the DC-DC conversion circuit 4 outputs the constant DC voltage Vb (300V) in which the voltage value does not vary. Since the constant DC voltage Vb is higher than the maximum value (282V) of the full-wave rectified voltage V1 outputted from the full-wave rectifying device 2, the constant DC voltage Vb is inputted to the luminaire 6. The luminaire 6 operates by the power generated by the solar cell 3.

When the sunshine of the sunlight also becomes weak and a DC voltage lower than the specified value Va is outputted from the solar cell 3, the DC-DC conversion circuit 4 outputs the DC voltage corresponding to the DC voltage V2 outputted from the solar cell 3. That is, as shown in FIG. 3, the DC-DC conversion circuit 4 reduces the output voltage V3 in proportion to the reduction of the DC voltage V2 outputted from the solar cell 3, which is caused by the weakening of the sunshine.

Besides, when the sunshine becomes weak and the DC voltage V3 outputted from the DC-DC conversion circuit 4 becomes equal to or lower than the maximum value (282V) of the full-wave rectified voltage V1 outputted from the full-wave rectifying device 2, the diode-OR output voltage of the full-wave rectified voltage V1 and the DC voltage V3 outputted from the DC-DC conversion circuit 4 is generated between the output terminals 10a and 10b and is inputted to the luminaire 6. For example, as shown in FIG. 2C, when a DC voltage of 140V is outputted from the DC-DC conversion circuit 4, a diode-OR output voltage V4 shown in FIG. 2D is generated between the output terminals 10a and 10b.

In a period Ta in which the DC voltage V3 outputted from the DC-DC conversion circuit 4 is lower than the full-wave rectified voltage V1 outputted from the full-wave rectifying device 2, the full-wave rectified voltage V1 is inputted to the luminaire 6. In a period Tb in which the DC voltage V3 outputted from the DC-DC conversion circuit 4 is equal to or higher than the full-wave rectified voltage V1, the DC voltage V3 outputted from the DC-DC conversion circuit 4 is inputted to the luminaire 6. That is, in the period Tb, the DC power corresponding to the amount of power generated by the solar cell 3 is supplied to the luminaire 6, and the input power (input current) inputted to the full-wave rectifying device 2 from the commercial AC power supply Vs is reduced in the period. As stated above, even when the sunshine is weak, the sunlight energy is effectively used.

Further, when the DC voltage V2 outputted from the solar cell 3 becomes low by the weakening of the sunshine of the sunlight, and the DC voltage V3 outputted from the DC-DC conversion circuit 4 becomes equal to or lower than the previously set value Vc, the DC-DC conversion circuit 4 stops the on and off operations of the field effect transistors Q1 and Q2, and stops the output of the output voltage (DC voltage). For example, as shown in FIG. 4A, when the output voltage V3 is reduced to 50V of the set value Vc or lower, the DC-DC conversion circuit 4 stop the power output. By this, in a period Tb' shown in FIG. 4B, the full-wave rectified voltage V1 outputted from the full-wave rectifying device 2 is outputted between the output terminals 10a and 10b, and the full-wave rectified voltage V1 is inputted to the luminaire 6.

Even if the DC voltage lower than the set value, for example, 50V is outputted from the DC-DC conversion circuit 4, as shown in FIG. 4B, the period Tb' in which the voltage is equal to or higher than the full-wave rectified voltage V1 is very small. That is, even if the DC voltage lower than the set value Vc is outputted from the DC-DC conversion circuit 4, the DC power generated by the solar cell 3 is very small. Accordingly, at that time, even if the DC power from the DC-DC conversion circuit 4 is supplied to the luminaire 6 as the load, the use efficiency of the sun energy is low, and it is more advantageous to stop the drive power of the DC-DC conversion circuit 4 in energy consumption efficiency.

Besides, in general, when the output voltage is equal to or lower than the specified voltage Vc (for example, 50V), the operation of the DC-DC conversion circuit 4 becomes unstable. In order to stabilize the operation also in the output voltage region of the specified voltage Vc or lower, the on and off control of the field effect transistors Q1 and Q2 is required to be finely performed at high precision, and the cost increases. Accordingly, the DC-DC conversion circuit 4 is preferably constructed so as to output the DC voltage within the range of from the specified voltage Vc to the constant DC voltage (300V).

As described above, the DC-DC conversion circuit 4 outputs the DC voltage, which gradually increases or decreases in response to the DC voltage outputted from the solar cell 3, between the output terminals 10a and 10b, and the DC power generated by the solar cell 3 is supplied to the luminaire 6 as the load irrespective of the amount of the power. In detail, except for the case where the output voltage of the DC-DC conversion circuit 4 is equal to or lower than the set value Vc (50V), the sun energy is supplied to the load. Accordingly, the power generated by the solar cell 3, that is, the sun (natural) energy can be efficiently supplied to the luminaire 6. As a result, power saving of the commercial AC power supply Vs in the DC power supply feeding system 1 can be realized. Besides, since the structure is simple in which the full-wave rectifying device 2 and the DC-DC conversion circuit 4 are connected in parallel to each other, the DC power supply feeding system 1 can be formed inexpensively.

Since the DC-DC conversion circuit 4 outputs a voltage up to the constant DC voltage (300V), even if the sunshine becomes high and the amount of power generation of the solar cell 3 becomes significantly large, input of overvoltage to the luminaire 6 can be prevented.

Besides, since the DC-DC conversion circuit 4 is configured to stop the voltage output when the output DC voltage is equal to or lower than the previously set value Vc, the unstable adjustment when the DC voltage outputted from the solar cell 3 is small can be avoided, and enhancement of the function of the circuit structure can be prevented. By this, the DC power supply feeding system 1 can be inexpensively configured.

Incidentally, the DC power supply feeding system 1 may be configured such that the backflow preventing diodes 5a and 5b as the reverse flow preventing elements are used also as the diode of the full-wave rectifying device 2 and the diode D2 of the DC-DC conversion circuit 4.

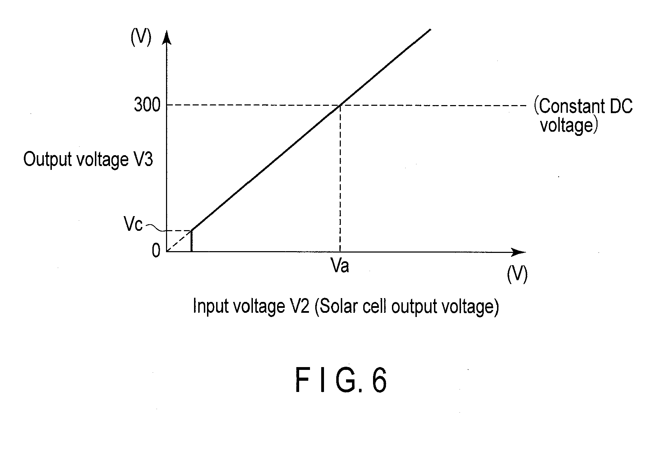

Besides, as shown in FIG. 6, the DC-DC conversion circuit 4 may be configured to output the DC voltage V3 which gradually increases over 300V or decreases in response to the input voltage, that is, the DC voltage V2 outputted from the solar cell 3. In this case, although the DC voltage exceeding the constant DC voltage (for example, DC 300V) and exceeding the allowable range can be supplied to the load, the DC voltage may be adjusted on the load side.

### Embodiment 2

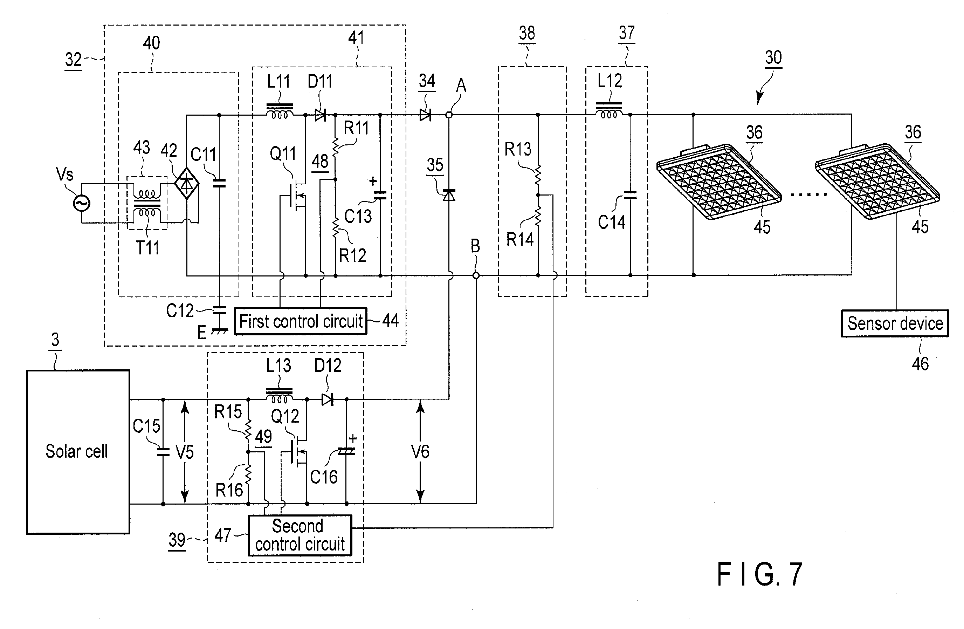

FIG. 7 is a schematic circuit view showing a DC power supply feeding system 30 of a second embodiment.

The DC power supply feeding system 30 includes a DC power supply circuit 32, a solar cell 3 as a power generating unit, first and second reverse flow preventing elements 34 and 35 as selection units, plural luminaires 36, a smoothing filter circuit 37, a voltage detection circuit 38 as a voltage detection unit, and a step-up chopper circuit 39 as a voltage raising unit. The DC power supply feeding system is configured by combining the DC power supply circuit 32 and the solar cell 3.

The DC power supply circuit 32 includes a full-wave rectifying circuit 40 and a step-up chopper circuit 41. The full-wave rectifying circuit 40 includes a full-wave rectifier 42, a noise filter circuit 43 and a capacitor C11. The noise filter circuit 43 includes a transformer T11. An input terminal of the full-wave rectifier 42 is connected to a commercial AC power supply Vs through the noise filter circuit 43. The capacitor C11 is connected between output terminals of the full-wave rectifier 42. A low voltage side of the capacitor C11 is connected to the earth E through a capacitor C12.

The full-wave rectifier 42 performs full-wave rectification of the AC voltage from the commercial AC power supply Vs, for example, AC 100V and outputs the full-wave rectified voltage between both ends of the capacitor C11. The capacitor C11 functions as a noise filter, and the capacity is set to, for example, 0.47 µF.

The step-up chopper circuit 41 chops the output voltage of the full-wave rectifying circuit 40 by an on and off operation of a field effect transistor Q11 and outputs a specified DC voltage, and is formed of a well-known structure. That is, the step-up chopper circuit includes a series circuit of an inductor L11 and the field effect transistor Q11 connected between the output terminals of the full-wave rectifier 42, a series circuit of a diode D11 and a smoothing capacitor C13 connected between drain and source of the field effect transistor Q11, and a voltage detection circuit 48 including resistors R11 and R12.

The gate of the field effect transistor Q11 is connected to a first control circuit 44. The detected voltage of the voltage detection circuit 48 is supplied to the first control circuit 44. The first control circuit 44 controls the duty ratio of a gate signal to the field effect transistor Q11 so that a specified DC voltage, for example, 380V is generated between both ends of the smoothing capacitor C13. In this way, the DC power supply circuit 32 converts the AC voltage of the commercial AC power supply Vs, for example, AC 100V to the specified DC voltage, for example, DC 380V and outputs the voltage.

In the solar cell 3, many cells are connected in series or series-parallel, and generate power from the sunlight as natural energy. An output end of the solar cell 3 is connected to a capacitor C15 and is connected to an input end of the step-up chopper circuit 39. A positive output terminal of the step-up chopper circuit 39 is connected to an output side of the DC voltage power supply circuit 32 through the reverse flow preventing element 35.

The first and second reverse flow preventing elements 34 and 35 are respectively formed of diodes, and the respective cathodes are connected in common. The first reverse flow preventing element 34 is connected to the high potential side of the DC power supply circuit 32, and the second reverse flow preventing element 35 is connected to the high potential side of the solar cell 3. The first reverse flow preventing element 34 and the second reverse flow preventing element 35 prevent the output current from reversely flowing.

Low potential sides of the full-wave rectifying circuit 40, the step-up chopper circuit 41 and the solar cell 3 are connected in common at a node B. The respective cathodes of the first and second reverse flow preventing elements 34 and 35 are connected in common at a node A. In this way, the DC power supply circuit 32 and the solar cell are combined, and the nodes A and B are common output terminals of the DC power supply circuit 32 and the solar cell 3. A larger voltage of the specified DC voltage, for example, DC 380V outputted from the DC power supply circuit 32 and the output voltage outputted from the solar cell 3 side is generated between the common output terminals A and B.

In the luminaire 36, light emitting diodes (LED) 45 as lighting loads are arranged in plane, and the plural luminaires are connected between the common output terminals A and B. A not-shown power supply device is disposed inside the luminaire 36. The power supply device inputs a voltage within a specified range, for example, 370V to 400V, and supplies a specified current to the light emitting diodes 45 to turn on the light emitting diodes 45. The light emitting diodes 45 are turned on and emit visible light, for example, white light.

A sensor device 46 is connected to at least one of the luminaires 36. The sensor device 46 is, for example, a human sensitive sensor or an illumination sensor. The power supply device turns on and off or dims the light-emitting diodes 45 according to the operation of the sensor device 46. The voltage between the common output terminals vary according to the load variation. That is, the input voltage inputted to the power supply device varies.

The smoothing filter circuit 37 includes an inductor L12 and a capacitor C14, and the inductor L12 and the capacitor C14 are connected in series between the common output terminals. When the voltage between the common output terminals varies in a short time or abruptly, the smoothing filter circuit 37 functions to suppress the voltage variation. That is, when the voltage between the common output terminals rises, a current flows through the smoothing filter circuit 37 from the high potential side of the common output terminals to the low potential side. By this, the voltage rise between the common output terminals is suppressed. Besides, when the voltage between the common output terminals decreases, current by electromagnetic energy stored in the inductor L12 or discharge current of the capacitor C14 flows from the smoothing filter circuit 37 to the high potential side of the common output terminals. By this, voltage reduction between the common output terminals is suppressed.

The voltage between the common output terminals varies by output variation from the step-up chopper circuit 39 (solar cell 3) side in addition to the load variation of the luminaire 36. That is, for example, when the sunlight is blocked by a cloud or the like, the output voltage of the solar cell 3 is abruptly changed.

The voltage detection circuit 38 includes a series circuit of a resistor R13 and a resistor R14, is connected between the common output terminals, and detects the voltage generated between the common output terminals. The voltage detection circuit 38 detects a specified DC voltage, for example, DC 380V from the DC power supply circuit 32, and the output voltage of the step-up chopper circuit 39 exceeding the specified DC voltage.

On the other hand, the step-up chopper circuit 39 includes an inductor L13, a field effect transistor Q12, a diode D12, a smoothing capacitor C16, a voltage detection circuit 49 and a second control circuit 47, and is formed similarly to the step-up chopper circuit 41. The second control circuit 47 performs the on-off operation of the field effect transistor Q12, so that the output voltage of the solar cell 3 is raised by a factor of several to several tens, and the raised voltage is outputted between the common output terminals.

Besides, the voltage generated between the common output terminals and detected by the voltage detection circuit 38 is inputted to the second control circuit 47. When the voltage is equal to or higher than a specified value, for example, DC 420V, the second control circuit 47 controls the on and off operation of the field effect transistor Q12, and reduces the output voltage of the step-up chopper circuit 39 so that a DC voltage lower than the specified value is outputted from the step-up chopper circuit 39.

Next, the operation of the second embodiment will be described.

When the commercial AC power supply Vs is turned on, a specified DC voltage, for example, DC 380V is outputted from the DC power supply circuit 32 to the common output terminals A and B. Besides, when the solar cell 3 generates power by the sunshine of the sunlight, the generated DC voltage is raised by the step-up chopper circuit 39 and is outputted between the common output terminals. A larger voltage of the specified DC voltage, for example, DC 380V outputted from the DC power supply circuit 32 and the output voltage outputted from the solar cell 3 side is inputted to the luminaire 36. When the solar cell 3 performs normal power generation, for example, DC 390V is outputted from the step-up chopper circuit 39. The power supply device of the luminaire 36 supplies specified current to the light emitting diodes 45. By this, the light emitting diodes 45 are turned on, and the luminaire 36 emits visible light, for example, white light.

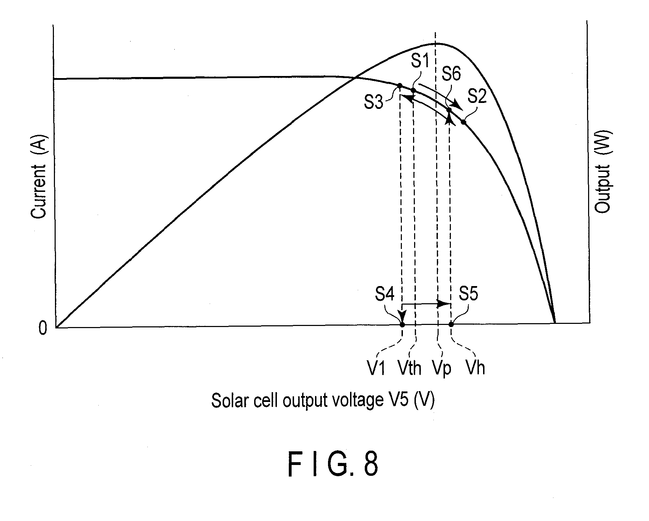

FIG. 8 shows a current (left vertical axis) - voltage (horizontal axis) characteristic of the solar cell 3, and an output (light vertical axis) - voltage (horizontal axis) characteristic. A voltage Vth indicates a voltage value of which the raised voltage raised by the step-up chopper circuit 39 can be the specified voltage, for example, DC 380V. A voltage Vp indicates a maximum power point voltage of the solar cell 3, that is, an output voltage at the time of maximum power generation.

When the power supply Vs is turned on, the second control circuit 47 starts the operation of the step-up chopper circuit 39, and electric charge is supplied to the capacitor C16. When an output voltage V5 of the solar cell 3 exceeds Vth (state S1), an output voltage V6 of the step-up chopper circuit 39 becomes equal to or higher than the specified voltage, and power is supplied from the step-up chopper circuit 39 to the luminaire 36. At this time, current from the DC power supply circuit 32 to the luminaire 36 is stopped. When the sunshine is sufficiently strong or the power consumption of the luminaire 36 is small, the solar cell 3 can operate at a voltage where the output voltage V5 exceeds the maximum power point voltage Vp (state S2).

When the sunshine becomes weak by a cloud or the like, and the output voltage V5 gradually decreases to be lower than Vth, power is supplied from the DC power supply circuit 32 to the luminaire 36. When the output voltage V5 decreases to a voltage V1 equal to or lower than Vth (state S3), the second control circuit 47 stops the operation of the step-up chopper circuit 39 (state S4). At this time, although current does not flow through the step-up chopper circuit 39, if the sunshine continues, the solar cell 3 stores electric charge in the capacitor C15 irrespective of the intensity of the sunshine, and the output voltage V5 gradually rises.

When the output voltage V5 reaches, for example, a specified voltage Vh exceeding the maximum power point voltage Vp (state S5), the second control circuit 47 resumes the operation of the step-up chopper circuit 39 (state S6). At this time, since the output voltage V5 is equal to or higher than the threshold voltage Vth, power is supplied from the step-up chopper circuit 39 to the luminaire 36, and current from the DC power supply circuit 32 to the luminaire 36 is stopped.

Here, when the state of the weak sunshine continues, the output voltage V5 decreases to the voltage V1 lower than the threshold voltage Vth (state S3). Then, the second control circuit 47 stops the operation of the step-up chopper circuit 39 (state S4). When the state of the weak sunshine continues as stated above, the second control circuit 47 controls the operation of the step-up chopper circuit 39, and repeats the states S2, S3, S4, S5 and S2.

As described above, according to this embodiment, even when the sunshine is weak and the voltage raised by the step-up chopper circuit becomes equal to or lower than the specified output voltage of the DC power supply circuit 32, for example, DC 380V, the power of the solar cell can be intermittently supplied to the luminaire 36. Accordingly, the power of the solar cell can be effectively used, and the power saving operation is possible. Incidentally, although the operation of this embodiment is possible even if the capacitor C15 is omitted, the sun energy can be naturally more effectively used if the capacitor C15 is provided.

Next, the smoothing filter circuit 37 of the embodiment will be described.

After the power supply Vs is turned on, the sensor device 46 operates, and when the light emitting diodes 45 of the luminaire 36 are turned on and off or dimmed, a voltage variation occurs between the common output terminals by this load variation. When the voltage variation is a voltage rise, current flows from a high potential side to a low potential side between the common output terminals through the smoothing filter circuit 37. When the voltage variation is a voltage drop, current flows from the smoothing filter circuit 37 side to the high potential side between the common output terminals. By this, the voltage variation between the common output terminals is suppressed.

Besides, when the output voltage from the solar cell 3 side is higher than the specified DC voltage, for example, DC 380V outputted from the DC power supply circuit 32, and the output voltage from the solar cell 3 side is generated between the common output terminals, if the output voltage from the solar cell 3 side abruptly changes because, for example, the sunshine of the sunlight becomes strong or weak, an abrupt voltage variation occurs between the common output terminals. Against the voltage variation, the smoothing filter circuit 37 operates as described above, and the voltage variation between the common output terminals is suppressed.

As described above, even if the load variation of the luminaire 36 or the output variation of the solar cell 3 side occurs, since the voltage variation between the common output terminals of the DC power supply circuit 32 and the solar cell 3 side is suppressed by the operation of the smoothing filter circuit 37, abrupt voltage change can be prevented from being inputted to the power supply device of the luminaire 36. By this, the luminaire 36 can emit stable visible light (illumination light).

The sunshine of the sunlight becomes further strong, the output voltage outputted from the solar cell 3 side rises, and when the voltage between the common output terminals becomes equal to or higher than a specified value, for example, 420V, the second control circuit 47 controls the on and off operation of the field effect transistor Q12 (reduces the duty ratio), and causes a DC voltage lower than the specified value to be outputted from the step-up chopper circuit 39. By this, the DC voltage lower than the specified value is inputted to the power supply device of the luminaire 36. As stated above, when the output voltage from the solar cell 3 side becomes equal to or higher than the specified value, overvoltage significantly higher than the specified input range of 370V to 400V can be prevented to be inputted to the power supply device of the luminaire 36. By this, failure or breakage of the power supply device of the luminaire 36 can be prevented.

Incidentally, the step-up chopper circuit 39 may be configured to completely block the output to the common output terminals when the output voltage from the solar cell 3 side becomes equal to or higher than the specified value.

Besides, the step-up chopper circuit 41 and the step-up chopper circuit 39 may be constructed so that diodes serving as the first and the second reverse flow preventing elements 34 and 35 as the selection unit are used also as the diode D11 of the step-up chopper circuit 41 and the diode D12 of the step-up chopper circuit 39.

The above description relates to the exemplary embodiments and does not limit devices and methods, and various modified embodiments can be easily carried out. For example, various embodiments can be constructed by suitable combinations of the plural components disclosed in the above embodiments. Besides, the exemplary embodiments can be applied to a power generation system using natural energy, such as a photovoltaic power generation system or a wind power generation system.

## Claims

1. A DC power supply feeding system **characterized by** comprising:
a DC voltage power supply that outputs a specified voltage by using a commercial AC power supply;
a varying voltage power supply that generates power by using natural energy and outputs a varying voltage; and
a reverse flow preventing elements that connect the DC voltage power supply and the varying voltage power supply in parallel while output sides are made to have same polarity, and supplies powers obtained from the DC voltage power supply and the varying voltage power supply to a load, wherein
when the output voltage of the varying voltage power supply is lower than the specified voltage outputted from the DC voltage power supply, supply of electric power from the varying voltage power supply to the load is temporarily stopped.

2. The system of claim 1, **characterized in that** the DC voltage power supply includes a full-wave rectifying device to perform full-wave rectification of an AC voltage of the AC power supply,
the varying voltage power supply includes a power generating unit configured to generate DC power from the natural energy and to output a DC voltage, and a DC-DC conversion circuit to raise or reduce the DC voltage outputted from the power generating unit, and
a larger voltage of an output voltage of the full-wave rectifying device and an output voltage of the DC-DC conversion circuit is supplied to output sides of the reverse flow preventing elements.

3. The system of claim 2, **characterized by** further comprising a voltage detection unit configured to detect the output voltage of the DC-DC conversion circuit, wherein
the DC-DC conversion circuit is configured to stop voltage output when the output voltage detected by the voltage detection unit is equal to or lower than a previously set value.

4. The system of claim 2, **characterized by** further comprising:
a voltage detection unit configured to detect the output voltage of the DC-DC conversion circuit; and
a control unit configured to control the DC-DC conversion circuit to cause, when the output voltage of the DC-DC conversion circuit exceeds a specified value, the output voltage to become lower than the specified value.

5. The system of claim 1, **characterized in that** the DC voltage power supply includes a constant voltage circuit to convert an AC voltage of the AC power supply to a constant DC voltage, and
the varying voltage power supply includes:
a power generating unit configured to generate the power from the natural energy;
a voltage raising unit configured to raise a voltage of the generated power and to output the voltage to the reverse flow preventing element; and
a control unit that controls the voltage raising unit to stop an operation of the voltage raising unit when the output voltage of the power generating unit does not reach the constant DC voltage even if the output voltage is raised by the voltage raising unit, and to resume the operation of the voltage raising unit when the output voltage of the power generating unit is raised and becomes a voltage of which the raised voltage raised by the voltage raising unit is equal to or higher than the constant DC voltage.

6. The system of claim 5, **characterized by** further comprising a smoothing filter circuit that is connected between the reverse flow preventing elements and the load, and suppresses an output voltage variation of the varying voltage power supply changing according to an output variation of the power generating unit.
